# NEUE EUROPÄISCHE PATENTSCHRIFT

(11) **EP 1 870 797 B2**
(45) Veröffentlichungstag und Bekanntmachung des Hinweises auf die Entscheidung über den Einspruch: **07.10.2020**
(45) Hinweis auf die Patenterteilung: 27.07.2011
(21) Anmeldenummer: 07012087.8
(22) Anmeldetag: 20.06.2007
(51) Int. Cl.: G06F 3/02, G06K 19/00, G06K 19/077, H04B 5/00

(54) **Informationsträger für Textilien**
Textile information carrier
Support d'information sur des textiles

(30) Priorität: 23.06.2006 DE 102006029312
(43) Veröffentlichungstag der Anmeldung: 26.12.2007
(73) Patentinhaber: ASTRA Gesellschaft für Asset Management mbH & Co. KG, 30890 Barsinghausen (DE)
(72) Erfinder: Stobbe, Anatoli, 30890 Barsinghausen (DE)
(74) Vertreter: Patentanwälte Thömen & Körner

(56) Entgegenhaltungen:
- EP-A- 0 977 145
- EP-A- 1 528 504
- EP-A2- 0 812 752
- WO-A-2006/028707
- WO-A-2007/012109
- WO-A-2007/028379
- DE-A1- 4 341 880
- DE-A1- 10 341 962
- DE-A1- 19 811 583
- DE-C1- 19 853 226
- DE-U1- 20 104 647
- US-A1- 2003 160 732
- US-B1- 6 378 774

## Beschreibung

Die Erfindung betrifft einen Textilinformationsträger nach dem Oberbegriff des Anspruchs 1.

Textilware wird üblicherweise vom Hersteller, Konfektionierer, Vertreiber oder Designer mit Textiletiketten versehen, die optisch lesbare Hinweise auf die Zusammensetzung der Ware, Anleitung für die Pflege und Reinigung sowie Angaben zur Konfektionsgröße, Herkunft, Handelsmarke oder Handelsname sowie den Designer enthalten.

Besonders bei hochwertiger Textilware werden zur Kennzeichnung Designeretiketten, so genannte Jacquard-Etiketten, oder mit dem Produzentenschriftzug oder der Marke bedruckte Etiketten, so genannte Satin-Etiketten verwendet, die in aufwendigen Verfahren hergestellt werden, um Nachbildungen zu erschweren.

Um Nachbildungen oder Falschetikettierungen besser erkennen zu können oder auch zur Identifikation von Textilwaren bei der Herstellung, Verarbeitung, beim Transport, bei der Lagerhaltung, beim Vertrieb und bei der Pflege und Reinigung werden zunehmend elektronische Datenträger eingesetzt, die redundante oder zusätzliche Informationen zum optisch lesbaren Textiletikett enthalten und nur über ein spezielles Lesegerät gelesen werden können. Der Vorteil von auf elektronischen Datenträgern gespeicherten Informationen besteht darin, dass sie weitgehend manipulationssicher und unempfindlich gegen Verschmutzung und Reinigungsmittel sind und auch ohne optische Sicht gelesen werden können.

Wegen der miniaturisierten Bauformen elektronischer Chipmodule für den HF-, UHF- und SHF-Bereich erfordert die Verbindung einer textilen Antenne mit Anschlüssen des elektronischen Chipmoduls ein hohes Maß an Präzision und ist in der Praxis sehr aufwendig zu realisieren. Aufgrund des textilen Charakters der Antenne sind die Anschlüsse zudem hohen mechanischen Beanspruchen ausgesetzt. Hinzu kommen noch mögliche thermische und chemische Einflüsse beim Tragen der Textilien am Körper sowie bei der Reinigung. Dadurch wird die Zuverlässigkeit der Verbindung zwischen der textilen Antennen und den Anschlüssen des elektronischen Chipmoduls beeinträchtigt.

Aus der WO 2006/028707 A1 ist ein RFID-Informationsträger bekannt, der einen magnetischen Koppler zwischen einem Schaltkreis und einer Antenne umfasst. Bei dem beschriebenen Substrat handelt sich nicht um eine Textilware, die bereits eine textile elektrische Antenne umfasst.

Aus der US 2003/0160732 A1 ist eine Textilware mit einem RFID-Transponder und einer textilen Antenne bekannt. Der Transponder ist bei einer der beschriebenen Ausführungen über eine Speiseleitung mit der Antenne verbunden. Die Ansprüche sind gegen dieses Dokument abgegrenzt.

Der Erfindung liegt die Aufgabe zugrunde, einen Textilinformationsträger zu schaffen, der eine kontaktlose Kopplung zwischen der Antenne und dem elektronischen Chipmodul ermöglicht.

Diese Aufgabe wird mit den Merkmalen des Anspruchs 1 gelöst.

Weiterbildungen und vorteilhafte Ausgestaltungen ergeben sich aus den Unteransprüchen.

Bei dem erfindungsgemäßen Textilinformationsträger wird das Chipmodul durch ein Koppelelement induktiv und/oder kapazitiv an die Antenne angekoppelt. Dazu ist das Chipmodul zusammen mit dem Koppelelement auf einem Detektierplättchen angeordnet. Das Chipmodul und das Koppelelement bilden eine integrale Einheit, das Detektierplättchen. Die Antenne selbst ist als elektrische Antenne ausgeführt und benötigt keinerlei galvanische Verbindung zum Chipmodul und Koppelelement.

Die Kombination aus dem entsprechend abgestimmten Koppelelement und der Antenne führt außerdem zu einer Erhöhung der Bandbreite des Gesamtsystems, wodurch erreicht wird, dass der Textilinformationsträger für einen Betrieb auf unterschiedlichen, aber benachbarten Frequenzen aufgrund unterschiedlicher nationaler Bestimmungen ohne konstruktive Änderungen und Abstimmungen kompatibel ist.

Bei dem erfindungsgemäßen Textilinformationsträger ist das Detektierplättchen mit der Textilware durch ein reversibel lösbares oder irreversibel unlösbares Befestigungsmittel verbunden sein.

Bei reversibel lösbaren Detektierplättchen kann das Detektierplättchen z. B. nach einem Fertigungs-, Transport- oder Verkaufsvorgang entfernt werden, wenn die Informationen anschließend nicht mehr benötigt werden oder nicht durch Unbefugte verwendet werden sollen. Außerdem ist es möglich, geringwertige Ware mit einer kostengünstigen "wegwerfbaren" elektrischen Antenne zu versehen und durch vorübergehenden Einbau eines wieder verwertbaren Detektierplättchens wenigstens bis zum Verkauf zu sichern.

Bei irreversibel unlösbar verbunden Detektierplättchen sollen die Informationen dauerhaft mit der Textilware verknüpft bleiben. Dadurch sind Manipulationen erschwert und ohne Zerstörung des Verbundes aus Textilware einerseits und Detektierplättchen andererseits nicht möglich.

Vorzugsweise ist die elektrische Antenne als Dipol, Halbwellenantenne, Vollwellenantenne oder als Groundplane ausgebildet und das Koppelelement ist an einem Ort der elektrischen Antenne angeordnet, bei dem ein minimales Stehwellenverhältnis auftritt.

Die Ausbildung der elektrischen Antenne als Dipol, Halbwellenstrahler, Vollwellenstrahler oder als Groundplane ermöglicht eine resonante Abstimmung auf die Arbeitsfrequenz und einen Antennengewinn gegenüber einem isotropen Strahler. Durch die Anordnung der Koppelschleife an einem Ort der elektrischen Antenne, bei dem ein minimales Stehwellenverhältnis auftritt, ergibt sich eine optimale Anpassung und Reichweite.

Die elektrische Antenne kann mechanisch verkürzt sein und eine mäanderförmige Verlängerungsinduktivität aufweisen.

Dadurch lässt sich eine Anpassung an die Arbeitsfrequenz auch bei Textilware erreichen, deren Abmessungen kleiner als ein ganzzahliges Vielfaches der viertel Wellenlänge der Arbeitsfrequenz sind. Die mäanderförmige Verlängerungsinduktivität ermöglicht eine Darstellung innerhalb einer Ebene und ohne Überschneidungen der Leiter. Eine industrielle Herstellung mit textilüblichen Verfahren, wie Weben oder Sticken ist möglich.

Vorzugsweise ist das Koppelelement als Koppelschleife innerhalb eines Mäanders aus zwei parallelen und einem dazu rechtwinkligen Leiter angeordnet.

In diesem Fall ist eine Umschließung der Koppelschleife bis zu drei-viertel ihres Umfangs möglich, was zu einer engen Kopplung zwischen der Koppelschleife und der elektrischen Antenne führt.

Die elektrische Antenne kann aus einem durchgehenden elektrischen Leiter gebildet sein, der durch Auftrennen in Resonanz abgestimmt wird.

Die Herstellung der Antenne wird vereinfacht, indem ein durchgehender textiler Faden verarbeitet wird. Durch das Auftrennen des elektrischen Leiters wird die Antenne am gewünschten Ort gebildet und gleichzeitig individuell in Resonanz auf die Arbeitsfrequenz des eingesetzten Detektierplättchens abgestimmt.

Das Befestigungsmittel kann als wenigstens ein am Detektierplättchen angebrachter und die Textilware durchdringender Dorn und einem ein Ende des Dorns aufnehmender, dem Detektierplättchen auf der gegenüberliegenden Seite der Textilware angeordneter Knopf ausgebildet sein.

Diese Ausführung des Befestigungsmittels ermöglicht eine formschlüssige Verbindung und ist damit besonders sicher. Bei reversibel lösbarer Ausführung kann ein Entfernen auch nur mit einem Sonderwerkzeug möglich sein, um ein unbefugtes Entfernen zu verhindern.

Das Befestigungsmittel kann auch als Schweißung oder Bondierung oder Kaschierung oder Laminierung oder Klebung oder Krimpen oder Klebefolie oder mittels einer unter Wärme und Druck hergestellten Patch-Verbindung ausgebildet sein.

Dabei kann das Befestigungsmittel als Thermo- oder Reaktionskleber ausgebildet sein.

Das Detektierplättchen wird mit der Textilware unmittelbar durch Verschmelzen von Fasern oder Filamenten oder mittelbar durch einen adhäsiven Werkstoff verbunden. Die textilen Eigenschaften der verbundenen Lagen aus dem Detektierplättchen und der Textilware bleiben so erhalten.

Ferner kann das Befestigungsmittel aus diskreten Verbindungspunkten oder sehr feiner, perforierter Klebefolie ausgebildet sein.

Durch die Beschränkung auf diskrete Verbindungspunkte oder eine sehr feine, das heißt dünne und flexible, perforierte Klebefolie wird eine Versteifung der verbundenen Lagen aus dem Detektierplättchen und der Textilware vermieden.

Das Befestigungsmittel kann auch aus Webgarnen gebildet sein, die im Bereich des Detektierplättchens über das Detektierplättchen gelegt und außerhalb des Detektierplättchens mit dem Gewebe der Textilware verwebt sind.

Hierdurch wird eine integrale Befestigung des Detektierplättchens innerhalb eines Gewebes der Textilware ermöglicht. Die Verbindung kann dabei innerhalb eines industriellen Webprozesses vorgenommen werden.

Das Befestigungsmittel kann auch als Klettverschluss ausgebildet sein.

Hierdurch ist eine schnelle Befestigung und Lösung des Detektierplättchens möglich.

Nachfolgend wird die Erfindung anhand von Ausführungsbeispielen erläutert, die in der Zeichnung dargestellt sind.

Darin zeigen:
- Fig. 1: ein Textiletikett mit einer elektrischen Antenne als mechanisch verkürzter Dipol und ein Detektierplättchen,
- Fig. 2: ein Textiletikett mit einer elektrischen Antenne aus einem durchgehenden elektri- schen Leiter gebildet ist, der durch Auf- trennen in Resonanz gebracht ist, und ein Detektierplättchen,
- Fig. 3a: ein auf einem Textiletikett befestigtes knopfartiges Detektierplättchen in Drauf- sicht,
- Fig. 3b: ein auf einem Textiletikett befestigtes knopfartiges Detektierplättchen im Schnitt mit einem das Textiletikett durchdringenden Dorn und einem Gegen- knopf,

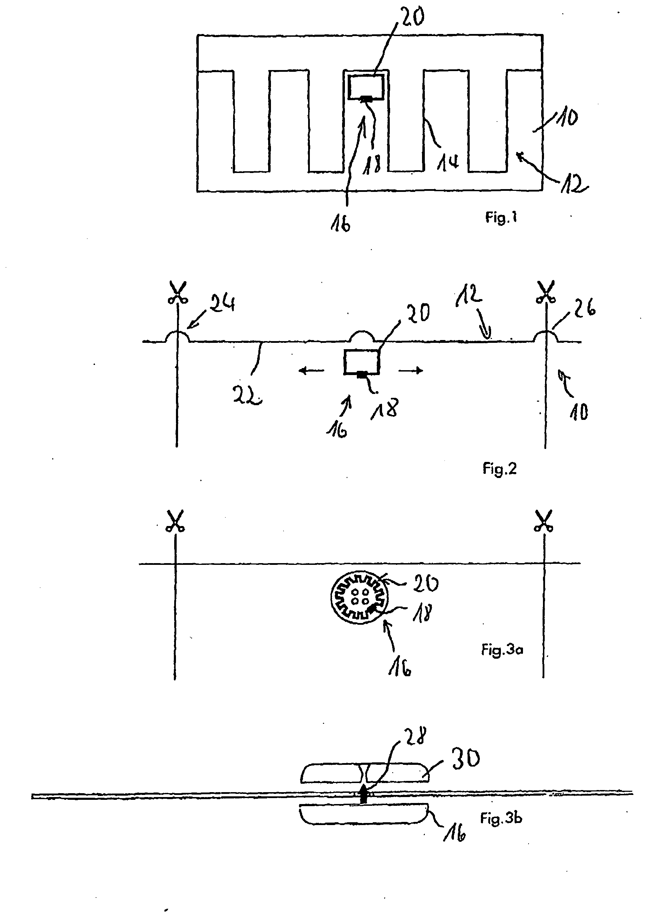

Fig. 1 zeigt ein Textiletikett 10 mit einer elektrischen Antenne 12. Die Antenne ist als mechanisch verkürzter Dipol mit einer mäanderförmigen Verlängerungsinduktivität 14 ausgeführt. Innerhalb eines Mäanders 14 in der Mitte der Antenne 12 ist ein Detektierplättchen 16 mit einem elektronischen Chipmodul 18 und einer mit dem elektronischen Chipmodul 18 verbundenen Koppelschleife 20 angeordnet. Die Koppelschleife 20 befindet sich an einem Ort niedriger Impedanz der elektrischen Antenne 12. Durch die Anordnung innerhalb eines Mäanders 14 aus zwei parallelen und einem dazu rechtwinkligen Leiter wird eine induktive Kopplung bei gleichzeitiger Impedanzanpassung zwischen der Koppelschleife 20 und der elektrischen Antenne 12 erzielt.

Fig. 2 zeigt ein weiteres Textiletikett 10 mit einer elektrischen Antenne 12. Die Antenne 12 ist aus einem ursprünglich durchgehenden elektrischen Leiter 22 gebildet, der an zwei Stellen 24, 26 aufgetrennt ist und so einen Dipol bildet. Das Auftrennen des Leiters 22 wird an Orten vorgenommen, die einen Abstand von einer halben Wellenlänge der Arbeitsfrequenz haben. Dadurch wird die gebildete Dipolantenne gleichzeitig in Resonanz auf die Arbeitsfrequenz abgestimmt. Neben der Antenne 12 ist ein Detektierplättchen 16 mit einem elektronischen Chipmodul 18 und einer mit dem elektronischen Chipmodul 18 verbundenen Koppelschleife 20 angeordnet. Die Koppelschleife 20 befindet sich an einem Ort niedriger Impedanz der elektrischen Antenne 12, vorzugsweise etwas zur Mitte versetzt. Auch dadurch wird eine induktive Kopplung bei gleichzeitiger Impedanzanpassung zwischen der Koppelschleife 20 und der elektrischen Antenne 12 erzielt.

Fig. 3a zeigt ein auf einem Textiletikett befestigtes knopfartiges Detektierplättchen 16 in Draufsicht und ist für die Ausführungen nach Fig. 1 und Fig. 2 geeignet.

Fig. 3b zeigt das knopfartige Detektierplättchen 16 im Schnitt mit einem das Textiletikett 10 durchdringenden Dorn 28 und einem Gegenknopf 30. Da dieses Detektierplättchen 16 formschlüssig mit dem Textiletikett 10 verbunden ist, kann es sehr klein ausgeführt sein. Dadurch ist es unauffällig und beeinträchtigt kaum den Tragekomfort. Außerdem bietet es wenig Angriffsfläche beim Reinigen und ist daher besonders haltbar. Die Verbindung lässt sich durch Zusammendrücken der Knopfbestandteile 16; 30 herstellen. Je nach konstruktiver Ausführung der Verbindung ist ein beschädigungsfreies Lösen, ggf. mit einem Spezialwerkzeug möglich, oder bei einer Rastverbindung, nur ein Lösen unter gleichzeitiger Zerstörung möglich.

## Patentansprüche

1. Textilinformationsträger bestehend aus einer Textitware, die eine elektrische Antenne (12) aus einem elektrisch leitfähigen textilen Faden umfasst,
und aus einem Detektierplättchen (16), das ein elektronisches Chipmodul (18) und ein mit dem Chipmodul (18) verbundenen Koppelelement (20) umfasst,
**dadurch gekennzeichnet, dass**
das Detektierplättchen (16) eine integrale Einheit bildet und auf der Textilware durch ein reversibel lösbares oder irreversibel unlösbares Befestigungsmittel befestigt ist,
dass das Befestigungsmittel diskrete Verbindungspunkte aufweist und
dass das Chipmodul (18) über das Koppelelement (20) mit der elektrischen Antenne (12) induktiv und/oder kapazitiv gekoppelt ist.

2. Textilinformationsträger nach Anspruch 1, **dadurch gekennzeichnet, dass** die elektrische Antenne (12) als Dipol, Halbwellenstrahler, Vollwellenstrahler oder als Groundplane ausgebildet ist und dass das Koppelelement (20) an einem Ort der elektrischen Antenne (12) angeordnet ist, bei dem ein minimales Stehwellenverhältnis oder eine optimale Bandbreite des Gesamtsystems oder ein optimaler Antennengewinn auftritt.

3. Textilinformationsträger nach Anspruch 1 oder 2, **dadurch gekennzeichnet, dass** die elektrische Antenne (12) gegenüber der resonanten Länge mechanisch verkürzt ist und eine mäanderförmige Verlängerungsinduktivität (14) aufweist.

4. Textilinformationsträger nach Anspruch 3, **dadurch gekennzeichnet, dass** das Koppelelement (20) über eine Strecke dem Verlauf der elektrischen Antenne (12) folgt.

5. Textilinformationsträger nach Anspruch 3 oder 4, **dadurch gekennzeichnet, dass** das Koppelelement (20) als Koppelschleife ausgebildet und innerhalb eines Mäanders (14) aus zwei parallelen und einem dazu rechtwinkligen Leiter angeordnet ist.

6. Textilinformationsträger nach einem der Ansprüche 1 bis 5, **dadurch gekennzeichnet, dass** das Befestigungsmittel als Schweißung oder Bondierung oder Kaschierung oder Laminierung oder Klebung oder Krimpen oder Klebefolie oder mittels einer unter Wärme und Druck hergestellten Patch-Verbindung ausgebildet ist.

7. Textilinformationsträger nach Anspruch 6, **dadurch gekennzeichnet, dass** das Befestigungsmittel als Thermo- oder Reaktionskleber (32) ausgebildet ist.

8. Textilinformationsträger nach einem der Ansprüche 1 bis 5, **dadurch gekennzeichnet, dass** das Befestigungsmittel aus Webgarnen ausgebildet ist, die im Bereich des Detektierplättchens (16) über das Detektierplättchen (16) gelegt und außerhalb des Detektierplättchens (16) mit dem Gewebe der Textilware verwebt sind.

## Claims

1. A textile information carrier, comprising a textile product, which encompasses an electric antenna (12) of an electrically conductive textile thread, and a detection plate (16), which encompasses an electronic chip module (18) and a coupling element (20) connected to the chip module (18), **characterised in that** the detection plate (16) forms an integral unit and is fixed on the textile product by a reversibly detachable or irreversibly undetachable fixing means, that the fixing means has discrete connection points and that the chip module (18) is inductively and/or capacitively coupled via the coupling element (20) to the electric antenna (12).

2. The textile information carrier according to Claim 1, **characterised in that** the electric antenna (12) is configured as a dipole, half-wave radiator, full-wave radiator or as a ground plane and that the coupling element (20) is arranged at a location of the electric antenna (12) at which a minimal voltage standing wave ratio or an optimal bandwidth of the entire system or an optimal antenna gain occurs.

3. The textile information carrier according to Claim 1 or 2, **characterised in that** the electric antenna (12) is mechanically shortened relative to the resonant length and has a meandering extension inductance (14).

4. The textile information carrier according to Claim 3, **characterised in that** the coupling element (20) follows the course of the electric antenna (12) over a distance.

5. The textile information carrier according to Claim 3 or 4, **characterised in that** the coupling element (20) is configured as an inductive link and is arranged within a meander (14) of two parallel conductors and a conductor perpendicular thereto.

6. The textile information carrier according to one of Claims 1 to 5, **characterised in that** the fixing means is configured as welding or bonding or coating or lamination or adhesion or crimping or adhesive film or by means of a patch connection produced under heat and pressure.

7. The textile information carrier according to Claim 6, **characterised in that** the fixing means is configured as a thermal or reaction adhesive (32).

8. The textile information carrier according to one of Claims 1 to 5, **characterised in that** the fixing means is configured from weaving yarns which are placed across the detection plate (16) in the region of the detection plate (16) and are woven with the fabric of the textile product outside the detection plate (16).

## Revendications

1. Support d'information textile constitué d'un produit textile comprenant une antenne électrique (12) en un fil textile électroconducteur, et d'une pastille de détection (16) comprenant un module à puce électronique (18) et un élément de couplage (26) relié au module à puce (18), **caractérisé en ce que** la pastille de détection (16) forme une unité intégrale et est fixée sur le produit textile à l'aide d'un moyen de fixation réversible amovible ou irréversible inamovible, **en ce que** le moyen de fixation présente des points de liaison discrets et **en ce que** le module à puce (18) est couplé de façon inductive ou capacitive à l'antenne électrique (12) par l'intermédiaire de l'élément de couplage (20).

2. Support d'information textile suivant la revendication 1, **caractérisé en ce que** l'antenne électrique (12) est conçu comme un dipôle, un radiateur demi-onde, un radiateur pleine onde ou comme une antenne ground plane et **en ce que** l'élément de couplage est disposé à un endroit de l'antenne électrique (12), auquel survient un rapport d'ondes stationnaires minimal ou une largeur de bande optimale du système intégral ou un gain directif optimal.

3. Support d'information textile suivant la revendication 1 ou 2, **caractérisé en ce que** l'antenne électrique (12) est raccourcie mécaniquement par rapport à la longueur de résonance et présente une inductance prolongée (14) en forme de méandres.

4. Support d'information textile suivant la revendication 3, **caractérisé en ce que** l'élément de couplage (20) suit la trajectoire de l'antenne électrique (12) sur une section.

5. Support d'information textile suivant la revendication 3 ou 4, **caractérisé en ce que** l'élément de couplage (20) est conçu comme boucle de couplage et disposé à l'intérieur d'un méandre (14) composé de deux conducteurs parallèles et d'un conducteur formant un angle droit avec ceux-ci.

6. Support d'information textile suivant une des revendications précédentes 1 à 5, **caractérisé en ce que** le moyen de fixation est conçu comme soudure ou métallisation ou doublage ou laminage ou collage ou sertissage ou film adhésif ou liaison par patch réalisée sous l'effet de chaleur et de pression.

7. Support d'information textile suivant la revendication 6, **caractérisé en ce que** le moyen de fixation est conçu comme colle thermique ou colle réactive (32).

8. Support d'information textile suivant une des revendications 1 à 5, **caractérisé en ce que** le moyen de fixation est formé de fils pour tissage, qui sont, dans la zone de la pastille de détection (16), posés sur celle-ci et tissés avec le tissu du produit textile à l'extérieur de la pastille de détection (16).
